Europäisches Patentamt

European Patent Office

Office européen des brevets

(11) Publication number: **0 674 190 A1**

## EUROPEAN PATENT APPLICATION

(21) Application number: **94120453.9**

(22) Date of filing: **22.12.94**

(51) Int. Cl.6: **G02B 5/18**

(30) Priority: **23.12.93 US 172317**

(43) Date of publication of application:
**27.09.95 Bulletin 95/39**

(84) Designated Contracting States:
**DE FR GB**

(71) Applicant: **XEROX CORPORATION**
**Xerox Square - 020**
**Rochester**
**New York 14644 (US)**

(72) Inventor: **Harris, Ellis D.**
**1646 Lynoak Drive**
**Claremont,**
**California 91711 (US)**

(74) Representative: **Grünecker, Kinkeldey,**
**Stockmair & Schwanhäusser**
**Anwaltssozietät**
**Maximilianstrasse 58**
**D-80538 München (DE)**

(54) **Binary diffraction optical element beam splitter.**

(57) A binary diffractive optical element (10) has a multilevel surface relief phase grating structure on an optical substrate which splits an incident light beam (18) into an undiffracted light beam (20) and a diffracted light beam (22).

FIG. 2

## BACKGROUND OF THE INVENTION

This invention relates to a binary diffractive optical element, and, more particularly, to a binary diffractive optical element which functions as a beam splitter.

The propagation of a light beam can be changed by three basic means: reflection by a mirror, refraction by a lens and diffraction by a grating. Optical systems traditionally rely on reflection and refraction to achieve the desired optical transformation. Optical design, based on mirror and lens elements, is a well-established and refined process. Until recently, the problems with diffraction and fabricating high efficiency diffractive elements have made diffractive elements unfeasible components of optical systems.

The diffractive process does not simply redirect a light beam. Diffraction, unlike refraction and reflection, splits a light beam into many beams -- each of which is redirected at a different angle or order. The percentage of the incident light redirected by the desired angle into some given diffraction order is referred to as the diffraction efficiency for that order. The diffraction efficiency of a diffractive element is determined by the element's surface profile. If the light that is not redirected by the desired angle is substantial, the result will be an intolerable amount of scatter in the image or output plane of the optical system.

Theoretically, on-axis diffractive phase elements consisting of a grating having a given period can achieve 100 percent diffraction efficiency. To achieve this efficiency, however, a continuous phase profile within any given period is necessary. The theoretical diffraction efficiency of this surface profile is also relatively sensitive to a change in wavelength. By contrast, refractive elements are relatively wavelength insensitive. The technology for producing high quality, high efficiency, continuous phase profiles of the diffraction does not presently exist.

A compromise that results in a relatively high diffraction efficiency and ease of fabrication is a multi-level phase grating. The larger the number of discrete phase levels, the better the approximation of the continuous phase function. The multi-level phase surface profiles of the grating can be fabricated using standard semiconductor integrated circuit fabrication techniques.

As disclosed in Binary Optics Technology: The Theory and Design of Multi-level Diffractive Optical Elements by G.J. Swanson of the Lincoln Laboratory at the Massachusetts Institute of Technology, (Technical Report 854, 14 August 1989), herewithin incorporated by reference, and the resulting U.S. Patent No. 4,895,790, a fabrication process starts with a mathematical phase description of a diffractive phase profile and results in a fabricated multi-level diffractive surface. The first step is to take the mathematical phase expression and generate from it a set of masks that contain the phase profile information. The second step is to transfer the phase profile information from the masks into the surface of the element specified by the lens design.

The first step involved in fabricating the multi-level element is to mathematically describe the ideal diffractive phase profile that is to be approximated in a multi-level fashion. The next step in the fabrication process is to create a set of lithographic masks which are produced by standard pattern generators used in the integrated circuit industry.

A substrate of the desired material, such as Ge, ZnSe, Si, GaAs, and $SiO_2$, is coated with a thin layer of photoresist. A first lithographic mask is then placed in intimate contact with the substrate and illuminated from above with an ultraviolet exposure lamp. Alternately, pattern generators, either optical or electron beam, can expose the thin layer of photoresist. The photoresist is developed, washing away the exposed resist and leaving the binary grating pattern in the remaining photoresist. This photoresist will act as an etch stop.

The most reliable and accurate way to etch many optical materials is to use reactive ion etching. The process of reactive ion etching anisotropically etches material at very repeatable rates. The desired etch depth can be obtained very accurately. The anisotropic nature of the process assures a vertical etch, resulting in a true binary surface relief profile. Once the substrate has been reactively ion etched to the desired depth, the remaining photoresist is stripped away, leaving a binary surface relief phase grating.

The process may be repeated using a lithographic mask having half the period of the first mask. The binary phase element is recoated with photoresist and exposed using the second lithographic mask which has half the period of the first mask. After developing and washing away the exposed photoresist, the substrate is reactively ion etched to a depth half that of the first etch. Removal of the remaining photoresist results in a 4 level approximation to the desired profile. The process may be repeated a third and fourth time with lithographic masks having periods of one-quarter and one-eighth that of the first mask, and etching the substrates to depths of one-quarter and one-eighth that of the first etch. The successive etches result in elements having 8 and 16 phase levels. More masks than four might be used, however, fabrication errors tend to predominate as more masks are used.

This process produces a multilevel surface relief grating structure in the substrate. The result is a discrete, computer-generated structure approximating the original idealized diffractive surface. For each additional mask used in the fabrication process, the number of discrete phase levels is doubled, hence the name "binary" optical element or, more precisely, a binary diffractive optical element.

After only four processing iterations, a 16 phase level approximation to the continuous case can be obtained. The process can be carried out in parallel, producing many elements simultaneously, in a cost-effective manner.

A 16 phase level structure achieves 99 percent diffraction efficiency. The residual 1 percent of the light is diffracted into higher orders and manifests itself as scatter. In many optical systems, this is a tolerable amount of scatter. The fabrication of the 16 phase level structure is relatively efficient due to the fact that only four processing iterations are required to produce the element.

After the first etching step, the second and subsequent lithographic masks have to be accurately aligned to the existing pattern on the substrate. Alignment is accomplished using another tool standard to the integrated circuit industry, a mask aligner.

As noted, the photoresist on the substrate can be exposed with an electron-beam pattern generator. The e-beam direct-write process eliminates masks and their corresponding alignment and exposure problems. Binary optics have also been reproduced using epoxy casting, solgel casting, embossing, injection molding and holographic reproduction.

Binary optical elements have a number of advantages over conventional optics. Because they are computer-generated, these elements can perform more generalized wavefront shaping than conventional lenses or mirrors. Elements need only be mathematically defined: no reference surface is necessary. Therefore, wildly asymmetric binary optics are able to correct aberrations in complex optical systems, and elements can be made wavelength-sensitive for special laser systems.

The diffractive optical elements are generally thinner, lighter and can correct for many types of aberrations and distortions. It is possible to approximate a continuous phase profile with a stepwise profile of discrete phase levels.

A number of beam splitting means are known in the art. Partially silvered mirrors or partially silvered prisms can be used to create multiple beams by separating the incident beam into a reflective beam and a transmitted beam. However, a substantial portion of the incident beam amy be lost to absorption and not split, transmittance/reflectance beam splitters are usually not efficient. Dielectric and dichroic films may also be used as beam splitters. However, a constant uniform thickness in the micron range is needed for such film beam splitters. Current technology can use single crystals, particularly calcite crystals, as beam splitters and beam combiners. However, these crystals cannot be artificially grown, which limits their availability and ability to be mass reproduced.

The advantages of a beam splitter formed from a binary diffractive optical element are the low cost and compact substrate of a binary diffractive optical element. The binary diffractive optical element beam splitter can be fabricated using photolithography techniques. The binary diffractive optical element beam splitter can be batch processed and coated with any necessary anti-reflective coatings upon a single substrate and subsequently diced into individual elements. The beam splitting and beam combining of a binary diffractive optical element only depend upon the grating period and the wavelength of light.

It is an object of this invention to provide a binary diffractive optical element which functions as a beam splitter.

## SUMMARY OF THE INVENTION

In accordance with the present invention, a binary diffractive optical element has a multilevel surface relief phase grating on an optical substrate which splits an incident light beam into an undiffracted light beam and a diffracted light beam with a given intensity ratio.

Other objects and attainments together with a fuller understanding of the invention will become apparent and appreciated by referring to the following description and claims taken in conjunction with the accompanying drawings.

## BRIEF DESCRIPTION OF THE DRAWINGS

Figure 1 is a schematic illustration of the cross-section side view of a binary diffractive optical element beam splitter formed according to the present invention.

Figures 2 is a schematic illustrations of the cross-section side view of a binary diffractive optical element beam splitter splitting an incident light beam into two separate light beams according to the present invention.

Figure 3 is a graph illustrating the diffraction efficiency of a binary diffractive optical element beam splitter with a specific index of refraction for varying groove depths according to the present invention.

Figure 4 is a schematic illustration of the cross-section side view of the diffraction beams of an alternate embodiment of a binary diffractive optical element beam splitter splitting an incident light beam into two separate focused light beams according to the present invention.

## DESCRIPTION OF THE PREFERRED EMBODIMENT

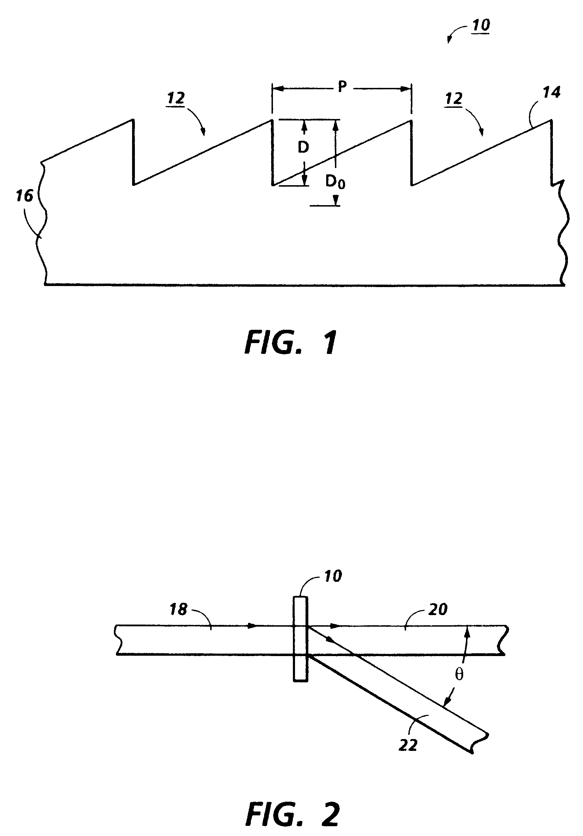

Reference is now made to Figure 1, wherein there is illustrated a binary diffractive optical element beam splitter 10 for diffracting a portion of an incident light beam into a first diffraction order beam while the remainder of the incident beam is transmitted through into an undiffracted zero order beam. The binary diffractive optical element 10, an assembly of blazed grooves 12, which, taken together, constitute the blazed grating, has a surface relief phase grating structure 14 on a substrate 16. The individual blazed grooves of the surface relief phase grating structure 14 of the binary diffractive optical element 10 have a grating period P and a depth D.

A blazed diffractive optical element will diffract incident light into a single order according to the wavelength and grating pitch and depth. The diffracted blazing angle will be defined by the sin of the angle equaling the wavelength divided by the pitch.

The optimum maximum depth, $d_0$, for the deepest phase level or groove in the binary diffractive optical element will be

$$d_0 = \lambda / (n - 1) \qquad \text{Equation 1}$$

where $\lambda$ is the wavelength of the incident light beam and n is the index of refraction of the optical substrate 16.

When the groove depth is at the optimum maximum depth, $d_0$, of Equation 1, then the diffractive efficiency is 100 percent. All of the incident beam will be diffracted into the first order beam by the binary diffractive optical element. None of the incident light beam would be transmitted through the binary diffractive optical element as the undiffracted, zero order beam.

At any other groove depth of the individual gratings of the surface relief phase grating structure, the diffraction efficiency is less than 100 percent and the undiffracted beam remains in the primary optical beam. Groove depth is thus a means to determine the amount of the incident beam split into the diffracted beam and the undiffracted beam. When the grating blaze is approximated by a series of binary steps, the performance of the resulting binary diffractive optical element approximates that of the diffractive element according to well-known relationships.

As shown in Figure 2, an incident beam 18 will be diffracted by binary diffractive optical element beam splitter 10. A portion of the beam 18 will be the undiffracted, zero order beam 20 which is transmitted through the binary diffractive optical element and remains on the same optical axis as the incident beam 18. A portion of the beam 18 will be diffracted into the first order diffracted beam 22. The intensity of the incident beam 18 will be split between the undiffracted, zero order beam 20 and the first order diffracted beam 22.

The angle $\theta$ by which the optical beam 22 is diffracted is dependent upon the wavelength $\lambda$ and the grating period P where

$$\sin \theta = \lambda / P \qquad \text{Equation 2}$$

where $\lambda$ is the wavelength of the incident light beam 18 and P is the grating period of the binary diffractive optical element 10.

In this illustrative example, the surface relief phase grating structure 14 is a sixteen level surface relief phase grating structure so that the diffraction efficiency is over 99 percent. For all intents and purposes, the incident beam is split into two beams, the undiffracted beam and the diffracted beam without any loss of intensity.

The diffraction efficiency, $\eta$, of the binary diffractive optical element beam splitter will determine the ratio of the intensity of the first order diffracted light beam 22 to the intensity of the zero order undiffracted beam 20.

$$\eta = \left[ \frac{\sin \pi \left( D(n-1)/\lambda - 1 \right)}{\left( D(n-1)/\lambda - 1 \right)} \right]^2$$

where D is the maximum groove depth of the individual gratings of the binary diffractive optical element 10, n is the index of refraction of the substrate 16 and $\lambda$ is the wavelength of the incident light beam 18.

The groove depth of the grating grooves in binary diffractive optical element offers a means of controlling the fraction of incident light which is diffracted. The Graph of Figure 3 shows that for a given wavelength of an incident light beam and a given index of refraction of the substrate of a binary diffractive optical element beam splitter, the fraction of light diffracted is a function of the depth of the individual grooves of the binary diffractive optical element beam splitter.

If the incident beam is collimated, the binary diffractive optical element beam splitter will keep the first order diffracted beam as a collimated beam if the grating period is constant. By adjusting the grating pitch, P, of the individual grooves over the surface relief phase grating structure 14, a lens effect of focusing, converging or diverging the diffracted beam can be achieved as well as control over the fraction of light diffracted. The longer the pitch, the less the angle of diffraction of the beam, as seen in Equation 2. The shorter the pitch, the greater the angle of diffraction of the light beam. Adjusting the pitch of the individual grooves that form the surface relief phase grating structure of the binary diffractive optical element beam splitter 24 of Figure 4 will converge the first order diffracted beam 26 while the undiffracted zero order beam 28 will remain collimated. The beam splitting ratio of the light in the two beams 24 and 26 will remain the same since it is determined by the groove depth, not the pitch. Adjusting the pitch of the individual grooves that form the surface relief phase grating structure of the binary diffractive optical element beam splitter can also diverge the first order diffracted beam.

Various combinations of groove depth and groove spacing can be utilized to provide a number of optical functions. Thus the intensity of the diffracted beam might be reprofiled as well as focussed as taught in US Patent Applications Serial Numbers 07/990,491 and 07/990,492, both commonly assigned to the same assignee as the present application and both herein incorporated by reference. Additionally, spherical or other aberrations might be eliminated by the binary diffractive optical element.

The substrate can be formed from glass, gallium arsenide, zinc selenide, germanium or quartz, for example.

While the invention has been described in conjunction with specific embodiments, it is evident to those skilled in the art that many alternatives, modifications and variations will be apparent in light of the foregoing description. Accordingly, the invention is intended to embrace all such alternatives, modifications and variations as fall within the spirit and scope of the appended claims.

## Claims

1. A binary diffractive optical element beam splitter comprising
   a multilevel surface relief phase grating structure upon an optical substrate for splitting an incident light beam into a diffracted light beam and an undiffracted light beam.

2. The binary diffractive optical element beam splitter of claim 1 wherein the beam splitting ratio of said diffracted light beam to said undiffracted light beam is the diffractive efficiency, $\eta$, of said binary diffractive optical element beam splitter.

3. The binary diffractive optical element beam splitter of claim 2 wherein said diffractive efficiency, $\eta$, of said binary diffractive optical element beam splitter whereby

$$\eta = \frac{\sin \pi ( D (n-1)/\lambda - 1)}{\pi ( D (n-1)/\lambda - 1)}^2$$

where D is the maximum groove depth of the individual gratings of said multilevel surface relief phase grating structure, n is the index of refraction of said substrate and $\lambda$ is the wavelength of said incident light beam.

4. The binary diffractive optical element beam splitter of claim 1 wherein said multilevel surface relief phase grating structure focuses said diffracted light beam.

5. The binary diffractive optical element beam splitter of claim 1 wherein said multilevel surface relief phase grating structure converges said diffracted light beam.

6. The binary diffractive optical element beam splitter of claim 1 wherein said multilevel surface relief phase grating structure diverges said diffracted light beam.

7. The binary diffractive optical element beam splitter of claim 1 wherein said incident light beam is collimated, said diffracted light beam is collimated and said diffracted light beam is collimated.

_10_

P

_12_                    _12_         _14_

D

$D_0$

16

## FIG. 1

_10_

18                    20

θ

22

## FIG. 2

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | APPLIED OPTICS, vol.31, no.22, 1 August 1992, NEW YORK US pages 4459 - 4470 E.N.GLYTSIS ET AL. 'HIGH-SPATIAL-FREQUENCY BINARY AND MULTILEVEL STAIRSTEP GRATINGS:POLARIZATION-SELECTIVE MIRRORS AND BROADBAND ANTIREFLECTION SURFACES' * abstract; figures 1,2 * | 1,6 | G02B5/18 |
| Y | | 5 | |
| Y | APPLIED OPTICS, vol.24, no.24, December 1985, NEW YORK US pages 4307 - 4311 G.HATAKOSHI ET AL. 'GRATING LENSES FOR THE SEMICONDUCTOR LASER WAVELENGTH' * abstract; figures 1-7 * | 5 | |
| X | EP-A-0 219 845 (KURARAY) * abstract; figures 1-4 * | 1,6 | |
| X | US-A-5 175 647 (M.C.GUPTA ET AL.) * abstract; figures 1-4 * | 1,6 | TECHNICAL FIELDS SEARCHED (Int.Cl.6) G02B |

The present search report has been drawn up for all claims

| Place of search | Date of completion of the search | Examiner |
|---|---|---|
| THE HAGUE | 5 April 1995 | Malic, K |

EPO FORM 1503 03.82 (P04C01)